(19) Europäisches Patentamt
European Patent Office
Office européen des brevets

(11) EP 3 067 859 A1

(12) EUROPEAN PATENT APPLICATION

(43) Date of publication:
**14.09.2016 Bulletin 2016/37**

(51) Int Cl.:
***G06T 7/00*** *(2006.01)*

(21) Application number: **15305370.7**

(22) Date of filing: **11.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
- **Gandolph, Dirk**
  **30952 Ronnenberg (DE)**
- **Putzke-Roeming, Wolfram**
  **31137 Hildesheim (DE)**
- **Borsum, Malte**
  **30655 Hannover (DE)**

(74) Representative: **Huchet, Anne et al**
**Technicolor**
**1, rue Jeanne d'Arc**
**92443 Issy-les-Moulineaux (FR)**

# (54) Method and apparatus for generating a superpixel cluster

(57) A method and an apparatus (20) for generating a superpixel cluster for a sequence of images are described. A first clustering unit (23) generates (10) a first superpixel cluster using a first distance measure, wherein superpixels in the first superpixel cluster may assume at least one of a first state and a second state. A second clustering unit (24) generates (11) a second superpixel cluster using a second distance measure, wherein superpixels in the second superpixel cluster may assume at least one of a first state and a second state. An intersecting unit (25) then generates (12) a combined superpixel cluster by intersecting the first superpixel cluster and the second superpixel cluster, wherein superpixels having the second state in both the first superpixel cluster and the second superpixel cluster are excluded from the combined superpixel cluster.

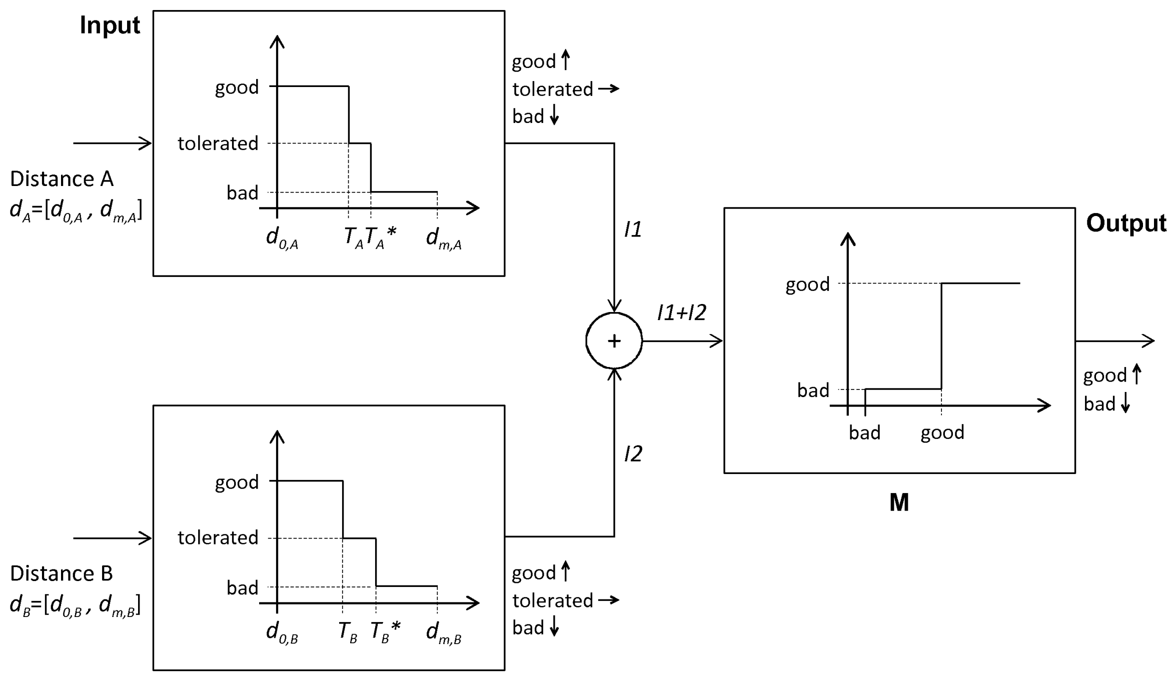


Fig. 13

EP 3 067 859 A1

## Description

### FIELD

The present principles relate to a method and an apparatus for generating a superpixel cluster for a sequence of images, and more specifically to a method and an apparatus for generating a superpixel cluster for a sequence of images using a heterogeneous clustering approach with an improved threshold setting.

### BACKGROUND

SCENE [1] is a European funded project studying the potential and possibilities arising with the aggregation of a plurality of various data for movie making. The incorporated data have a wide spectrum, reaching from sampled-based sources, e.g. video, at one end to the model-based scene descriptions, e.g. CGI (CGI: Computer-Generated Imagery), at the other. Aim of the SCENE project is to provide richer media representations, which seamlessly combine 3D video capturing with CGI. The development of a new data format called SCENE Representation Architecture (SRA) serves to hold these data and has the potential to enhance the complete chain of multidimensional media production. Tools developed simultaneously with the new format allow generating and handling SRA files and can be deployed and extended for delivering SCENE media to either 2D or 3D platforms in either linear or interactive form.

One task to be solved for creating the SRA data is the generation of spatio-temporally consistent scene representations intended to describe a higher abstraction layer lying beyond pure object detection. The initial tool applied to establish the abstraction layer is video over-segmentation as described in [2], which generates pixel segments, also known as superpixels. The superpixel approach resolves scene objects into smaller parts while preserving the object borders such that subsequent processing steps are able to generate higher abstraction layers providing a link to model-based CGI representations.

The subsequent process for generating a higher abstraction layer builds on the superpixel approach and requires the forming of superpixel clusters described by connected superpixels. Connected superpixels are a first form of higher abstraction, as they represent a patch-based object description in the scene. Due to the availability of different features within the SCENE format the connected superpixels can be determined by considering different features describing the superpixels. The features handled exemplarily in the following are, for example, but not limited to, color similarity, depth or disparity similarity, and temporal consistency.

A well suited heterogeneous clustering algorithm, which analyzes features with fixed as well as relative references for the connected superpixel forming, is described in [3]. This algorithm already complies with the connectivity objective by providing compact clusters and avoiding any fractionalized results. It also allows generating connected superpixels across multiple images, thus creating a volume of connected superpixels and describing a scene object over time.

An issue related to the approach in [3] is the determination of appropriate thresholds across a long sequence of images. While the threshold determination for the heterogeneous cluster algorithm described in the document is feasible for a smaller number of images, it may become cumbersome if complete video scenes have to be handled. Here slight illumination drifts or scene object constellation changes along the scene impede a global threshold value selection and require an adaptation of the thresholds along the scene in order to avoid quality losses for the resulting connected superpixel.

### SUMMARY

The present principles relate to a method and an apparatus for generating a superpixel cluster for a sequence of images.

According to one aspect of the present principles, a method for generating a superpixel cluster for an image or a sequence of images comprises:

- generating a first superpixel cluster using a first distance measure, wherein superpixels in the first superpixel cluster may assume at least one of a first state and a second state;
- generating a second superpixel cluster using a second distance measure, wherein superpixels in the second superpixel cluster may assume at least one of a first state and a second state; and
- generating a combined superpixel cluster by intersecting the first superpixel cluster and the second superpixel cluster, wherein superpixels having the second state in both the first superpixel cluster and the second superpixel cluster are excluded from the combined superpixel cluster.

Accordingly, a computer readable storage medium has stored therein instructions enabling generating a superpixel cluster for an image or a sequence of images, which when executed by a computer, cause the computer to:

- generate a first superpixel cluster using a first distance measure, wherein superpixels in the first superpixel cluster may assume at least one of a first state and a second state;
- generate a second superpixel cluster using a second distance measure, wherein superpixels in the second superpixel cluster may assume at least one of a first state and a second state; and
- generate a combined superpixel cluster by intersecting the first superpixel cluster and the second superpixel cluster, wherein superpixels having the second state in both the first superpixel cluster and the second superpixel cluster are excluded from the combined superpixel cluster.

The computer readable storage medium is a non-transitory volatile or non-volatile storage medium, such as, for example, but not limited to, a hard disk, an optical or magnetic disk or tape, a solid state memory device, etc. The storage medium thus tangibly embodies a program of instructions executable by a computer or a processing device to perform program steps as described herein.

Also, in one embodiment, an apparatus configured to generate a superpixel cluster for an image or a sequence of images comprises:

- a first clustering unit configured to generate a first superpixel cluster using a first distance measure, wherein superpixels in the first superpixel cluster may assume at least one of a first state and a second state;
- a second clustering unit configured to generate a second superpixel cluster using a second distance measure, wherein superpixels in the second superpixel cluster may assume at least one of a first state and a second state; and
- an intersecting unit configured generate a combined superpixel cluster by intersecting the first superpixel cluster and the second superpixel cluster, wherein superpixels having the second state in both the first superpixel cluster and the second superpixel cluster are excluded from the combined superpixel cluster.

In another embodiment, an apparatus configured to generate a superpixel cluster for a sequence of images comprises a processing device and a memory device having stored therein instructions, which, when executed by the processing device, cause the apparatus to:

- generate a first superpixel cluster using a first distance measure, wherein superpixels in the first superpixel cluster may assume at least one of a first state and a second state;
- generate a second superpixel cluster using a second distance measure, wherein superpixels in the second superpixel cluster may assume at least one of a first state and a second state; and
- generate a combined superpixel cluster by intersecting the first superpixel cluster and the second superpixel cluster, wherein superpixels having the second state in both the first superpixel cluster and the second superpixel cluster are excluded from the combined superpixel cluster.

Image over-segmentation is used to break image content into abstract fractions. In the present case these fractions are superpixels, which are generated in a temporally consistent manner. The sizes of the superpixels are determined, for example, by a pixel count in between a minimum and a maximum limit according to a compactness constraint. One application of image over-segmentation in video is the detection of objects or parts of objects within a movie sequence. Here the generated segmentation patches formed by superpixels subsequently serve to generate an abstraction layer describing the scene. This is reached by analyzing connectivity attributes for clustering the superpixels. Known solutions use rigid threshold operations for clustering. Unfortunately, the use of rigid threshold values may make cluster forming prone to errors caused by changes of object illumination and/or motions of scene objects. These effects are omnipresent in video clips and may require that the cluster forming thresholds are frequently adapted by an operator.

The described solution analyzes different superpixel characteristics in a heterogeneously combined clustering algorithm using an advanced threshold scheme. The advanced scheme breaks with frequently adapting the thresholds for determining the affiliation or rejection of superpixels and analyzes single thresholds within their tolerance ranges instead. In other words, the superpixels included in a cluster have one of the states ’good’ and ’tolerated’. The state ’good’ is assigned to a superpixel for which the value of the distance measure is below a first threshold. The state ’tolerated’ is assigned to a superpixel for which the value of the distance measure is between the first threshold and a second threshold. Superpixels that are marked ’good’ in one cluster and at least ’tolerated’ in the other cluster remain in the combined cluster. The advanced threshold scheme thus considers the seriousness of a threshold infringement and appropriately adapts the decision to include a superpixel in the combined superpixel cluster. This is very useful as slight illumination drifts and changes in the object arrangements are omnipresent in video clips and may impede the forming of connected superpixels based on a fixed threshold approach.

In one embodiment, color and depth are analyzed, which means that the first distance measure is a color

distance and the second distance measure is a depth distance. The proposed advanced threshold evaluation compensates fluctuations appearing in the illumination of moving objects (color threshold) as well as changes in the object arrangements (depth threshold), which is reached by analyzing threshold infringements lying within the tolerance range in relation to the remaining feature similarities. The properties of the two characteristics differ in the way of distance measuring with respect to their references. While the color information is measured using a fixed reference superpixel for the cluster, the depth information distance is measured with a propagating reference superpixel for the cluster.

The advanced threshold scheme disclosed herein is reliable and robust, i.e. the generated connected superpixels have a higher confidence. It enlarges the mean applicable time range for the threshold settings and remains valid for longer image sequences. This relieves the operator from the threshold adaptation task and makes his work more effective. A further problem addressed by the proposed approach is the difficulty to formulate a sophisticated and more natural decision criterion for accepting or rejecting candidate superpixels for the cluster.

**BRIEF DESCRIPTION OF THE DRAWINGS**

Fig. 1 shows an input image,

Fig. 2 shows superpixels associated with the input image of Fig. 1,

Fig. 3 shows depth information associated with the input image of Fig. 1,

Fig. 4 illustrates superpixel cluster generation using a fixed reference superpixel,

Fig. 5 illustrates superpixel cluster generation using a propagating reference superpixel,

Fig. 6 depicts a known function for coarse threshold criteria,

Fig. 7 shows a block diagram illustrating the processing according to the function of Fig. 6,

Fig. 8 shows a result of merging two superpixel clusters generated with a fixed reference superpixel and a propagating reference superpixel, respectively,

Fig. 9 illustrates a first part of a heterogeneous cluster forming process,

Fig. 10 illustrates a second part of a heterogeneous cluster forming process,

Fig. 11 depicts a function of enhanced threshold criteria,

Fig. 12 shows a block diagram illustrating the processing according to the function of Fig. 11,

Fig. 13 illustrates the combination of the analysis of two different distances using enhanced threshold criteria,

Fig. 14 depicts the combination of the analysis of *n* different distances using enhanced threshold criteria,

Fig. 15 illustrates a first part of a modified heterogeneous cluster forming process,

Fig. 16 illustrates a second part of a modified heterogeneous cluster forming process,

Fig. 17 schematically illustrates an embodiment of a method for generating a superpixel cluster,

Fig. 18 schematically depicts one embodiment of an apparatus for generating a superpixel cluster according to the present principles; and

Fig. 19 schematically illustrates another embodiment of an apparatus for generating a superpixel cluster according to the present principles.

## DETAILED DESCRIPTION OF PREFERED EMBODIMENTS

For a better understanding the principles of some embodiments shall now be explained in more detail in the following description with reference to the figures. It is understood that the proposed solution is not limited to these exemplary embodiments and that specified features can also expediently be combined and/or modified without departing from the scope of the present principles as defined in the appended claims.

The higher abstraction layer of connected superpixels is generated by evaluating feature distances existing between pairs of superpixels. An initial superpixel of interest is selected automatically or by a user and an algorithm analyzes the color and depth distance to the neighboring superpixels. Thresholds setting the maximum allowed distances determine the affiliation or the rejection of the analyzed neighboring superpixels to the resulting cluster of superpixels. The cluster forming algorithm is intended to generate connected superpixels encompassing only superpixels belonging to the same scene object from which the initial superpixel of interest has been selected.

Figs. 1 to 3 show an example of the input data used for the generation of connected superpixels. Fig. 1 depicts the color information, Fig. 2 the superpixel areas, and Fig. 3 the depth information, where brighter pixels are closer to the camera than darker pixels. The example of Fig. 1 demonstrates the similarity between objects of the foreground and the background in the scene as the skin color of the mannequin is very similar to the color of the white wall in the scene. Assuming that the generation of a connected superpixel is started by selecting the mannequin's face, the resulting superpixel cluster -if based on the color information analysis alone- will probably include superpixels of the light grey background in the scene. This is prevented by incorporating the depth information during the cluster forming.

For the superpixel cluster generation the algorithm described in [3] analyzes two characteristics with different properties, namely color information and depth information. The properties of the two characteristics differ in the way of distance measuring concerning their references. While the color information is measured using a fixed reference superpixel for the cluster, the depth information distance is measured with a propagating reference superpixel for the cluster. Fig. 4 and Fig. 5 show the differences between the cluster forming executed for the fixed reference superpixel and the propagating reference superpixel, respectively.

In particular, Fig. 4 depicts an example of the first three stages for the homogeneous cluster forming applied for color information. A user or a selection engine initially selects a superpixel of interest, which becomes the fixed reference superpixel for all color distance measures. It is marked by the superpixel $\mathbf{a_0}$ in all stages of Fig. 4. During the entire cluster forming process the color distances are calculated by comparing the new candidate superpixel against the reference superpixel $\mathbf{a_0}$. In stage **A** the reference superpixel $\mathbf{a_0}$ is tested against the neighboring superpixels $\mathbf{b_1}$ to $\mathbf{b_5}$. In the example only superpixel $\mathbf{b_1}$ passes the affiliation condition. In stage **B** the cluster forming algorithm examines the new neighboring superpixels $\mathbf{c_1}$ to $\mathbf{c_3}$ by comparing it against the fixed reference superpixel $\mathbf{a_0}$ again. Here only superpixel $\mathbf{c_3}$ is rejected and hence not included in the cluster. In stage **C** the new neighboring superpixels $\mathbf{d_1}$ to $\mathbf{d_6}$ are tested against the reference superpixel $\mathbf{a_0}$.

Fig. 5 shows the example of the homogeneous cluster forming applied for depth information. Here the reference superpixel propagates. Stage **A** in Fig. 5 depicts the beginning of the process, which is the same as in Fig. 4. The reference superpixel $\mathbf{a_0}$ is compared against the neighboring superpixels $\mathbf{b_1}$ to $\mathbf{b_5}$, where only $\mathbf{b_1}$ is affiliated to the cluster. In stage **B** the reference superpixel propagates and superpixel $\mathbf{b_1}$ becomes the reference. The new neighboring superpixels related to $\mathbf{b_1}$ are analyzed by testing $\mathbf{c_1}$, $\mathbf{c_2}$, and $\mathbf{c_3}$ but also $\mathbf{b_2}$ and $\mathbf{b_5}$ for a second time. The result of this analysis in stage **B** affiliates the superpixels $\mathbf{c_1}$, $\mathbf{c_2}$, and $\mathbf{b_5}$ to the cluster of the connected superpixels, while superpixels $\mathbf{b_2}$ and $\mathbf{c_3}$ are rejected. Stage **C** is split into three stages, each handling a different propagating reference superpixel, and is determined by all accepted superpixels of the previous stage **B.** Stage $\mathbf{C_1}$ uses superpixel $\mathbf{c_1}$, stage $\mathbf{C_2}$ uses superpixel $\mathbf{c_2}$, and stage $\mathbf{C_3}$ uses superpixel $\mathbf{b_5}$ as propagating reference superpixels. The affiliation results of each substage are merged for the cluster forming result of stage **C** by applying the "**U**"-operator to all sets resulting from $\mathbf{C_1}$, $\mathbf{C_2}$, and $\mathbf{C_3}$.

Both types of the homogeneous cluster forming - the fixed cluster reference type as well as the propagating cluster reference type - apply a coarse threshold criteria to decide on the affiliation or rejection of superpixel candidates. Fig. 6 depicts a known function for the coarse threshold criteria, Fig. 7 the corresponding block diagram. The function is suitable for color and depth by utilizing separately adapted threshold values $T$ for each.

Fig. 6 shows the value range for distance measures reaching from a minimum value $\boldsymbol{d_0}$ up to the maximum value $d_m$. The threshold value $T$ is located in the range including the two extremes and divides the output into 'good' and 'bad', meaning accepted or rejected. Fig. 7 shows a block diagram illustrating the processing in accordance with Fig. 6, i.e. the application of the coarse threshold function. The input signal of the distance measure $d$ is evaluated by the threshold and generates either the output 'good' if the distance is smaller or equal to the threshold or the output 'bad' if the distance is larger than the threshold. Thus, the coarse threshold criteria provides a binary decision.

After generating two independent homogeneous clusters for color and for depth information the combined superpixel cluster is generated by merging the two interim superpixel clusters. This is done be intersecting the two sets of superpixels applying the "$\cap$"-operation. An example is shown in Fig. 8, where the homogeneous interim mask $\mathbf{C_F}$

based on color and generated with a fixed reference superpixel is merged with the homogeneous interim mask $\mathbf{C_P}$ based on depth and generated with a propagating reference superpixel by set intersection. The resulting combined cluster forming the superpixel cluster **CS** shows a possible drawback caused by this intersection operation. The superpixel marked with **x** becomes locally isolated, which means that the resulting superpixel cluster is not compact.

The principle of the proposed heterogeneous cluster forming process is depicted in Figs. 9 and 10. For simplicity only the relevant steps are illustrated, not the entire procedure. The heterogeneous cluster forming starts with stage $\mathbf{S_1}$ in Fig. 9. A user or a selection engine, e.g. a processor, selects a superpixel of interest $\mathbf{a_0}$, to which the cluster forming is applied. The procedure goes on with two separate branches marked with **C** and **D,** treating the fixed and the propagating reference superpixels separately.

In the stages $\mathbf{C_2}$ and $\mathbf{C_3}$ of the first branch the color distance is evaluated using the fixed reference superpixel $\mathbf{a_0}$. In particular the superpixels $\mathbf{b_1}$ to $\mathbf{b_5}$ are tested. Stage $\mathbf{C_3}$ shows that only $\mathbf{b_1}$ and $\mathbf{b_5}$ reach the tentative cluster affiliation, while the remaining superpixels $\mathbf{b_2}$, $\mathbf{b_3}$, and $\mathbf{b_4}$ are rejected by testing the color distance using the thresholding according Figs. 6 and 7. In the stages $\mathbf{D_2}$ and $\mathbf{D_3}$ of the second branch the depth distance is evaluated using the propagating reference superpixel, which in this case also is $\mathbf{a_0}$. The depth distance evaluation in the example rejects the two superpixels $\mathbf{b_3}$ and $\mathbf{b_4}$, proposing $\mathbf{b_1}$, $\mathbf{b_2}$, and $\mathbf{b_5}$ for cluster affiliation. Stage $\mathbf{J_4}$ joins the clusters of $\mathbf{C_3}$ and $\mathbf{D_3}$ by intersecting the two sets of superpixels. Superpixels which are in both branches marked as tentatively accepted become finally accepted. The cluster resulting from stage $\mathbf{J_4}$ constitutes an interim result, which is the new starting point for stage $\mathbf{S_5}$ depicted in Fig. 10.

In Fig. 10 the procedure continues again with separate branches. In these branches the fixed and the propagating reference superpixels are treated separately. In the upper branch **C** the fixed reference superpixel $\mathbf{a_0}$ is used to test the color distance measures for stages $\mathbf{C_6}$ and $\mathbf{C_7}$. The threshold evaluation of color distance measures for the superpixels $\mathbf{c_1}$ to $\mathbf{c_6}$ depicted in stage $\mathbf{C_6}$ rejects all superpixels except $\mathbf{c_3}$ and $\mathbf{c_4}$, as shown in stage $\mathbf{C_7}$.

The remaining branches **D** and **E** are dedicated to the evaluation of the propagating reference superpixels. In the present case there are two branches, one for each superpixel affiliated in the previous step, i.e. $\mathbf{b_1}$ and $\mathbf{b_5}$. Superpixel $\mathbf{b_1}$ becomes the propagating reference superpixel for branch **D,** whereas superpixel $\mathbf{b_5}$ becomes the propagating reference superpixel for branch **E.** Of course, if more superpixels are affiliated in the previous step, more branches are used. In stage $\mathbf{D_6}$ the new neighboring superpixels $\mathbf{c_4}$ to $\mathbf{c_6}$ related to $\mathbf{b_1}$ are tested by checking the depth distance measures. Stage $\mathbf{D_7}$ shows that superpixels $\mathbf{c_4}$ and $\mathbf{c_5}$ are tentatively accepted. In stage $\mathbf{E_6}$ the new neighboring superpixels related to $\mathbf{b_5}$ are verified by assessing the depth distance measures against superpixels $\mathbf{c_1}$ to $\mathbf{c_4}$, of which $\mathbf{c_2}$ and $\mathbf{c_3}$ are tentatively affiliated as shown in stage $\mathbf{E_7}$.

The clustering results of stages $\mathbf{C_7}$, $\mathbf{D_7}$, and $\mathbf{E_7}$ are joined in stage $\mathbf{J_8}$. This is done by a pairwise application of the set intersection operation for the fixed reference superpixel result $\mathbf{C_7}$ and all propagating reference superpixel results $\mathbf{D_7}$ and $\mathbf{E_7}$, followed by an accumulation according to the equation

$$\mathbf{J_8} = (\mathbf{C_7} \cap \mathbf{D_7}) \cup (\mathbf{C_7} \cap \mathbf{E_7}). \qquad (1)$$

The general rule for joining tentatively accepted superpixels with the combined cluster is to accumulate ("$\cup$"-operation) the pairwise intersections ("$\cap$"-operation). The pairwise intersections are built from the single set **F** obtained with the fixed reference superpixel matched to all individual sets $\mathbf{P_n}$ formed using the different propagating reference superpixels.

This can be expressed by the equation

$$\mathbf{J_k} = \bigcup_{\mathbf{i=1}}^{\mathbf{N_{k-1}}} (\mathbf{F_{k-1}} \cap \mathbf{P_{k-1,i}}). \qquad (2)$$

The set **F** contains the superpixels resulting from the *'fixed reference superpixel cluster forming'* process, whereas the sets $\mathbf{P_i}$ are the superpixel sets generated by the different *'propagating reference superpixel cluster forming'* processes.

The count $\mathbf{N_{k-1}}$ of sets generated by the different propagating reference superpixel cluster forming branches is determined by the number of affiliated superpixels of the previous joining $\mathbf{J_{k-1}}$, starting with the selected superpixel of interest $\mathbf{a_0}$.

The description of the example stops here, but the heterogeneous cluster forming process preferably continues until reaching the condition that either all superpixels in the picture have been evaluated or that all superpixel candidates are rejected for the cluster.

According to the present principles a more sophisticated calculus is implemented to decide about the affiliation or rejection of superpixel candidates, which incorporates the correlation between color and depth. This is reached by considering cases where one of the criteria just misses the threshold condition. The simple approach of Fig. 6 and 7 to

reject all superpixels for the cluster if the distance measure exceeds a single threshold is coarse and may not reliably cope with the existing statistical variances in a scene caused by slight illumination drifts and changes in the object arrangements, especially when considering temporal superpixel clustering. This aggravates an appropriate threshold finding and makes the results less reliable unless the thresholds are frequently adjusted. To overcome this impairment a more robust and related consideration of color and depth is used, which is described in the following.

Figs. 11 and 12 depict the function and block diagram, respectively, of the disclosed enhanced threshold criteria, which extends the solution given in Figs. 6 and 7. The enhanced approach generates one out of three possible outputs, as depicted in Fig. 11. The value range for the distance measures reaches from a minimum value $\boldsymbol{d_0}$ up to the maximum value $d_m$. The threshold value $T$ is located in the range including the two extremes and divides the output into 'good' and the combined region of 'tolerated' and 'bad', which on their part are separated by the second threshold $T^*$. The second threshold $T^*$ is determined by a tolerance measure $\sigma$ defined by

$$T^* = \sigma \cdot T \text{ with } \sigma > 1. \qquad (3)$$

Fig. 12 shows a block diagram illustrating the processing according to Fig. 11, i.e. applying the enhanced threshold criteria. The input signal of the distance measure $d$ is evaluated by threshold $T$ and the derived threshold $T^*$, generating either the output 'good' if the distance is smaller or equal to the threshold $T$, the output 'tolerated' if the distance is larger than threshold $T$ and smaller or equal to the second threshold $T^*$, or the output 'bad' if the distance is larger than the second threshold $T^*$.

The introduction of the additional outcome 'tolerated' located between 'good' and a 'bad' can be used to combine the color distance and depth distance analysis, as shown in Fig. 13. The outputs generated with independent thresholds $T_A$, $T_A^*$ for color and $T_B$, $T_B^*$ for depth are evaluated in a further block **M** described by the truth table below. The output is summarized by the relation

$$\mathbf{O} = \mathbf{M}(\mathrm{I1}, \mathrm{I2}). \qquad (4)$$

Table 1: Truth table for block **M**

| **Input 1** | **Input 2** | **Output** |
|---|---|---|
| 'good' | 'good' | 'good' |
| 'good' | 'tolerated' | 'good' |
| 'good' | 'bad' | 'bad' |
| 'tolerated' | 'good' | 'good' |
| 'tolerated' | 'tolerated' | 'bad' |
| 'tolerated' | 'bad' | 'bad' |
| 'bad' | 'good' | 'bad' |
| 'bad' | 'tolerated' | 'bad' |
| 'bad' | 'bad' | 'bad' |

The signal merging block **M** again generates the binary output 'good' or 'bad'. The output becomes 'good' if one of the two input signals is 'good' while the other is 'tolerated' or if both inputs are 'good'. For all other input combinations the output is set to 'bad'. This solution softens the harsh cut given by the simple threshold $T$ by considering the second threshold $\boldsymbol{T^*}$ and combining the results provided by the two features.

The proposed approach can be further extended by evaluating the three levels 'good', 'tolerated' and 'bad' for more than two inputs. The solution for $\boldsymbol{n}$ inputs is illustrated in Fig. 14. The signal merging block $\mathbf{M}_n$ accumulates the $\boldsymbol{n}$ input values. The accumulation function employed by the signal merging block $\mathbf{M}_n$ sets the value outputs that are accumulated to tolerated = good/$n$, where the values of 'good' and 'bad' must be discriminable and identical for all contributing block diagrams, e.g. '1' for 'good' and '0' for 'bad'.

The way in which the heterogeneous cluster forming changes when the enhanced threshold criteria is applied is shown in Figs. 15 and 16. The process is similar to the heterogeneous cluster forming depicted in Figs. 9 and 10, but

creates also tentative rejected superpixels within the interim clusters representing the output 'tolerated'. To incorporate the evaluation of the triple logic encompassing the values 'good', 'tolerated, and 'bad', the joining equation (2) is adapted by means of equation (4) and becomes

$$\mathbf{J_k} = \bigcup_{\mathbf{i=1}}^{\mathbf{N_{k-1}}} \mathbf{M}\,(\,\mathbf{F_{k-1}}, \mathbf{P_{k-1,i}}\,)\,. \qquad (5)$$

It applies the truth Table 1 of block **M.**

As before, not a complete example is depicted, but again all relevant steps are covered. The modified heterogeneous cluster forming starts with stage $\mathbf{S_1}$ in Fig. 15. A user or a selection engine selects a superpixel of interest $\mathbf{a_0}$**,** to which the cluster forming is applied. The procedure goes on with two separate branches marked with **C** and **D,** treating the fixed and the propagating reference superpixels separately.

In the stages $\mathbf{C_2}$ and $\mathbf{C_3}$ of the first branch the color distance is evaluated using the fixed reference superpixel $\mathbf{a_0}$. In particular the superpixels $\mathbf{b_1}$ to $\mathbf{b_5}$ are tested. Stage $\mathbf{C_3}$ shows that only $\mathbf{b_1}$ reaches the tentative cluster affiliation ('good'), while the superpixels $\mathbf{b_3}$, $\mathbf{b_4}$, and $\mathbf{b_5}$ get the status tentatively rejected, which is equivalent to the value 'tolerated'. Only superpixel $\mathbf{b_2}$ is finally rejected ('bad') by testing the color distance.

In the stages $\mathbf{D_2}$ and $\mathbf{D_3}$ of the second branch the depth distance is evaluated using the propagating reference superpixel, which in this case also is $\mathbf{a_0}$. The depth distance evaluation in the example applies the threshold according to Figs. 11 and 12 and rejects the superpixel $\mathbf{b_4}$ ('bad'), assigns the status tentatively rejected to superpixels $\mathbf{b_3}$ ('tolerated'), and proposes $\mathbf{b_1}$, $\mathbf{b_2}$, and $\mathbf{b_5}$ for cluster affiliation ('good'). Stage $\mathbf{J_4}$ joins the clusters of $\mathbf{C_3}$ and $\mathbf{D_3}$ by applying equation 5 to the two sets of superpixels. Superpixels which reach the status 'good' by the merging relation **M** become finally accepted. The cluster resulting from stage $\mathbf{J_4}$ constitutes an interim result, which is the new starting point for stage $\mathbf{S_5}$ depicted in Fig. 16.

In Fig. 16 the procedure continues again with separate branches. In these branches the fixed and the propagating reference superpixels are treated separately. In the upper branch **C** the fixed reference superpixel $\mathbf{a_0}$ is used to test the color distance measures for stages $\mathbf{C_6}$ and $\mathbf{C_7}$. The enhanced threshold evaluation of color distance measures for the superpixels $c_1$ to $c_6$ depicted in stage $\mathbf{C_6}$ finally rejects superpixels $\mathbf{c_1}$ and $\mathbf{c_2}$ ('bad'), tentatively rejects $\mathbf{c_5}$ and $c_6$ ('tolerated'), and tentatively accepts $\mathbf{c_3}$ and $\mathbf{c_4}$ ('good'), as shown in stage $\mathbf{C_7}$**.**

The remaining branches **D** and **E** are dedicated to the evaluation of the propagating reference superpixels. In the present case there are two branches, one for each superpixel affiliated in the previous step, i.e. $\mathbf{b_1}$ and $\mathbf{b_5}$. Superpixel $\mathbf{b_1}$ becomes the propagating reference superpixel for branch **D,** whereas superpixel $\mathbf{b_5}$ becomes the propagating reference superpixel for branch **E.** Of course, if more superpixels are affiliated in the previous step, more branches are used. In stage $\mathbf{D_6}$ the new neighboring superpixels $c_4$ to $c_6$ related to $\mathbf{b_1}$ are tested by checking the depth distance measures. Stage $\mathbf{D_7}$ shows the tentative affiliation of superpixels $c_4$ and $\mathbf{c_5}$ and the tentative rejection of superpixel $c_6$. In stage $\mathbf{E_6}$ the new neighboring superpixels related to $\mathbf{b_5}$ are verified by assessing the depth distance measures against superpixels $\mathbf{c_1}$ to $\mathbf{c_4}$, of which $c_2$ and $\mathbf{c_3}$ are tentatively accepted, $c_1$ is rejected, and $c_4$ is tentatively rejected, as shown in stage $\mathbf{E_7}$.

The clustering results of stages $\mathbf{C_7}$, $\mathbf{D_7}$, and $\mathbf{E_7}$ are joined in stage $\mathbf{J_8}$ This is done by a pairwise application of the operation **M** of equation 4, executing the truth Table 1 for the fixed cluster reference result $\mathbf{C_7}$ and all propagating cluster reference results $\mathbf{D_7}$ and $\mathbf{E_7}$, followed by an accumulation according to equation 5, which in this case becomes

$$\mathbf{J_8} = \mathbf{M}(\,\mathbf{C_7}, \mathbf{D_7}\,) \cup \mathbf{M}(\,\mathbf{C_7}, \mathbf{E_7}\,). \qquad (6)$$

The description of the example stops here, but the modified heterogeneous cluster forming process would continue as already described for the heterogeneous cluster forming process until reaching the condition that either all superpixels in the picture have been evaluated or that all superpixel candidates are rejected for the cluster.

Fig. 17 schematically illustrates one embodiment of a method for generating a superpixel cluster. A first superpixel cluster is generated 10 using a first distance measure, wherein superpixels in the first superpixel cluster may assume at least one of a first state and a second state. A second superpixel cluster is generated 11 using a second distance measure, wherein superpixels in the second superpixel cluster may assume at least one of a first state and a second state. Then a combined superpixel cluster is generated 12 by intersecting the first superpixel cluster and the second superpixel cluster, wherein superpixels having the second state in both the first superpixel cluster and the second superpixel cluster are excluded from the combined superpixel cluster.

One embodiment of an apparatus 20 for generating a superpixel cluster according to the present principles is schematically depicted in Fig. 18. The apparatus 20 has an input 21 for receiving an image or a sequence of images, e.g. from a network or an external storage system. Alternatively, the image or the sequence of images is retrieved from a local storage unit 22. A first clustering unit 23 generates 10 a first superpixel cluster using a first distance measure,

wherein superpixels in the first superpixel cluster may assume at least one of a first state and a second state. A second clustering unit 24 generates 11 a second superpixel cluster using a second distance measure, wherein superpixels in the second superpixel cluster may assume at least one of a first state and a second state. An intersecting unit 25 then generates 12 a combined superpixel cluster by intersecting the first superpixel cluster and the second superpixel cluster, wherein superpixels having the second state in both the first superpixel cluster and the second superpixel cluster are excluded from the combined superpixel cluster. The clustering results are preferably made available via an output 26. They may also be stored on the local storage unit 22. The output 26 may also be combined with the input 21 into a single bidirectional interface. Each of the different units 23, 24, 25 can be embodied as a different processor. Of course, the different units 23, 24, 25 may likewise be fully or partially combined into a single unit or implemented as software running on a processor.

Another embodiment of an apparatus 30 for generating a superpixel cluster according to the present principles is schematically illustrated in Fig. 19. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or a combination thereof.

The local storage unit 22 and the memory device 32 may include volatile and/or non-volatile memory regions and storage devices such as hard disk drives and DVD drives. A part of the memory is a non-transitory program storage device readable by the processing device 31, tangibly embodying a program of instructions executable by the processing device 31 to perform program steps as described herein according to the present principles.

**REFERENCES**

[1] http://3d-scene.eu

[2] Achanta et al.: "SLIC Superpixels Compared to State-of-the-Art Superpixel Methods", IEEE Transactions on Pattern Analysis and Machine Intelligence, Vol. 43 (2012), pp. 2274-2282.

[3] European Patent Application EP14306577.9

**Claims**

1. A method for generating a superpixel cluster for an image or a sequence of images, the method **comprising:**

   - generating (10) a first superpixel cluster using a first distance measure, wherein superpixels in the first superpixel cluster may assume at least one of a first state and a second state;
   - generating (11) a second superpixel cluster using a second distance measure, wherein superpixels in the second superpixel cluster may assume at least one of a first state and a second state; and
   - generating (12) a combined superpixel cluster by intersecting the first superpixel cluster and the second superpixel cluster, wherein superpixels having the second state in both the first superpixel cluster and the second superpixel cluster are excluded from the combined superpixel cluster.

2. The method according to claim 1, **wherein** the first distance measure corresponds to color distance.

3. The method according to claim 1 or 2, **wherein** the second distance measure corresponds to depth distance.

4. The method according to one of the preceding claims, **wherein** the first superpixel cluster is generated (10) using a fixed reference superpixel technique.

5. The method according to one of the preceding claims, **wherein** the second superpixel cluster is generated (11) using a propagating reference superpixel technique.

6. The method according to one of the preceding claims, **wherein** the at least two states are ’good’ and ’tolerated’.

**7.** The method according to claim 6, **wherein** the state 'good' is assigned to a superpixel for which the value of the distance measure is below a first threshold (*T*), and wherein the state 'tolerated' is assigned to a superpixel for which the value of the distance measure is between the first threshold *(T)* and a second threshold *(T*).*

**8.** A computer readable storage medium having stored therein instructions enabling generating a superpixel cluster for an image or a sequence of images, which when executed by a computer, cause the computer to:

- generate (10) a first superpixel cluster using a first distance measure, wherein superpixels in the first superpixel cluster may assume at least one of a first state and a second state;
- generate (11) a second superpixel cluster using a second distance measure, wherein superpixels in the second superpixel cluster may assume at least one of a first state and a second state; and
- generate (12) a combined superpixel cluster by intersecting the first superpixel cluster and the second superpixel cluster, wherein superpixels having the second state in both the first superpixel cluster and the second superpixel cluster are excluded from the combined superpixel cluster.

**9.** An apparatus (20) configured to generate a superpixel cluster for an image or a sequence of images, the apparatus (20) **comprising:**

- a first clustering unit (23) configured to generate (10) a first superpixel cluster using a first distance measure, wherein superpixels in the first superpixel cluster may assume at least one of a first state and a second state;
- a second clustering unit (24) configured to generate (11) a second superpixel cluster using a second distance measure, wherein superpixels in the second superpixel cluster may assume at least one of a first state and a second state; and
- an intersecting unit (25) configured generate (12) a combined superpixel cluster by intersecting the first superpixel cluster and the second superpixel cluster, wherein superpixels having the second state in both the first superpixel cluster and the second superpixel cluster are excluded from the combined superpixel cluster.

**10.** An apparatus (30) configured to generate a superpixel cluster for an image or a sequence of images, the apparatus (30) comprising a processing device (31) and a memory device (32) having stored therein instructions, which, when executed by the processing device (31), cause the apparatus (30) to:

- generate (10) a first superpixel cluster using a first distance measure, wherein superpixels in the first superpixel cluster may assume at least one of a first state and a second state;
- generate (11) a second superpixel cluster using a second distance measure, wherein superpixels in the second superpixel cluster may assume at least one of a first state and a second state; and
- generate (12) a combined superpixel cluster by intersecting the first superpixel cluster and the second superpixel cluster, wherein superpixels having the second state in both the first superpixel cluster and the second superpixel cluster are excluded from the combined superpixel cluster.

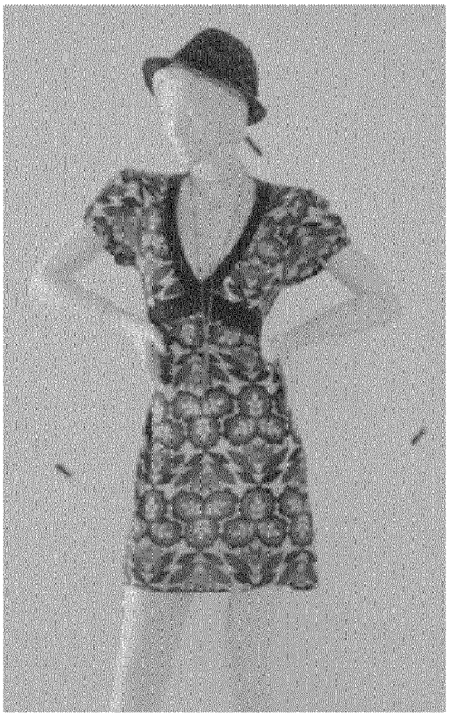

Fig. 1

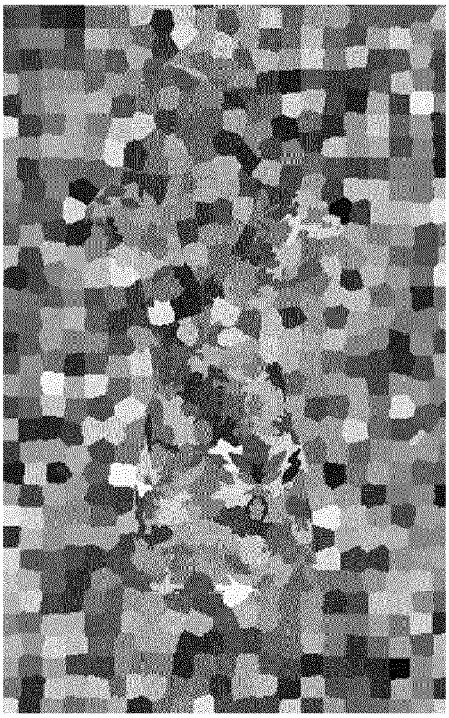

Fig. 2

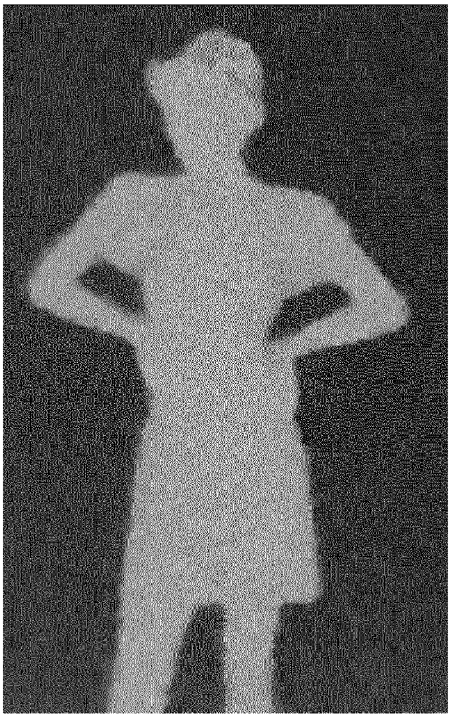

Fig. 3

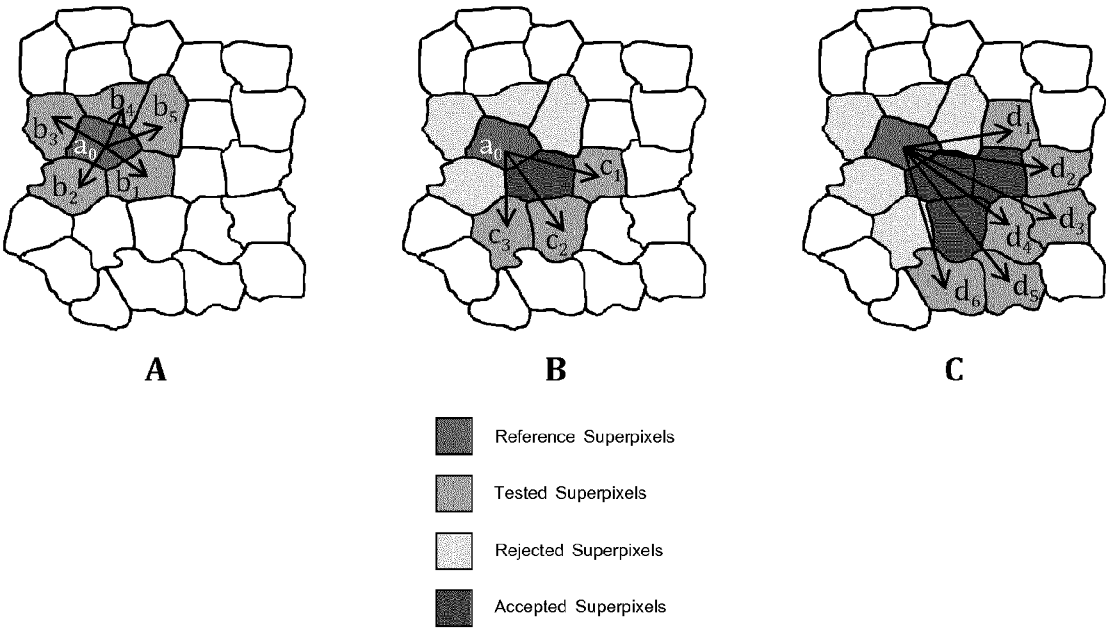
b3
b4
b5
a0
b2
b1
A
a0
c1
c3
c2
B
d1
d2
d3
d4
d6
d5
C
Reference Superpixels
Tested Superpixels
Rejected Superpixels
Accepted Superpixels

Fig. 4

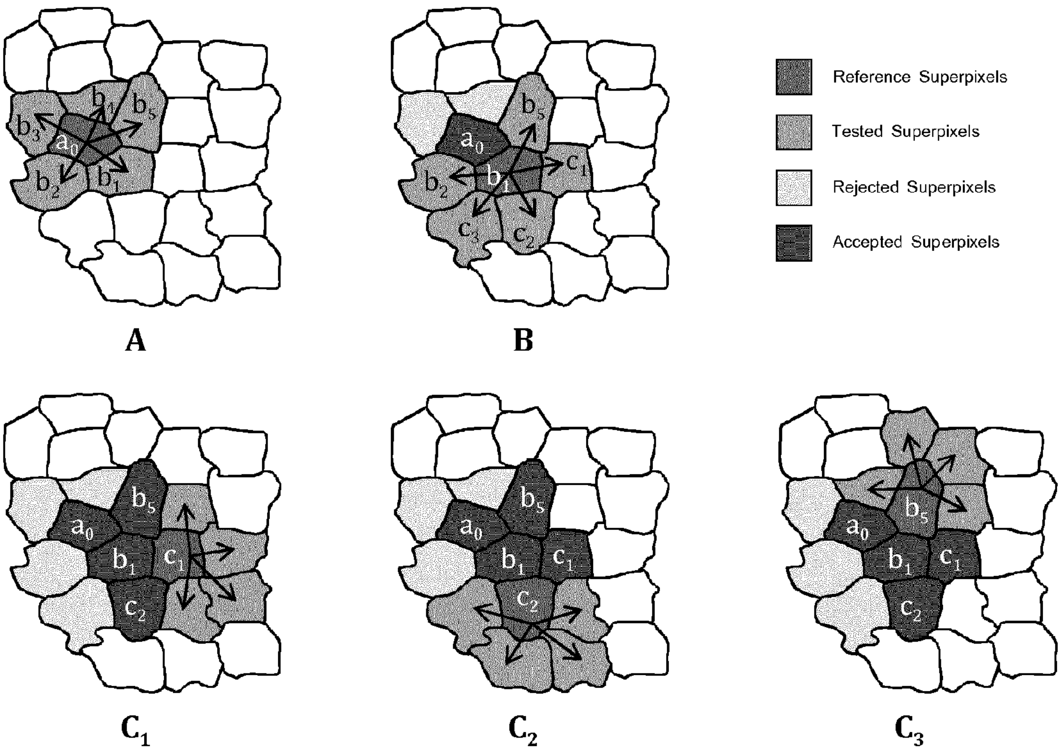
Reference Superpixels
Tested Superpixels
Rejected Superpixels
Accepted Superpixels
A
B
C1
C2
C3

Fig. 5

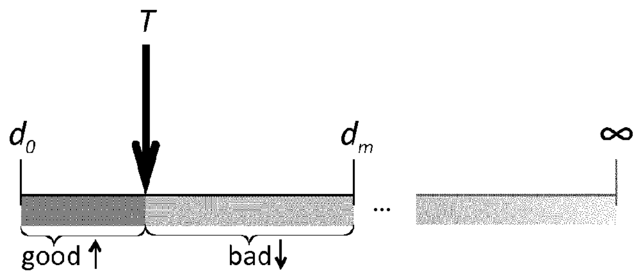
T
d0
dm
∞
good
bad

Fig. 6

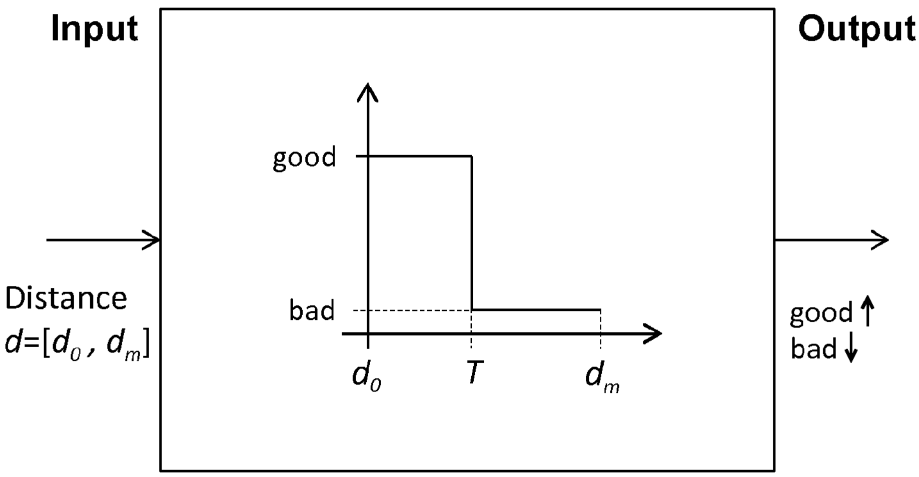
Input
Output
good
bad
Distance
d=[d0 , dm]
d0
T
dm
good ↑
bad ↓

Fig. 7

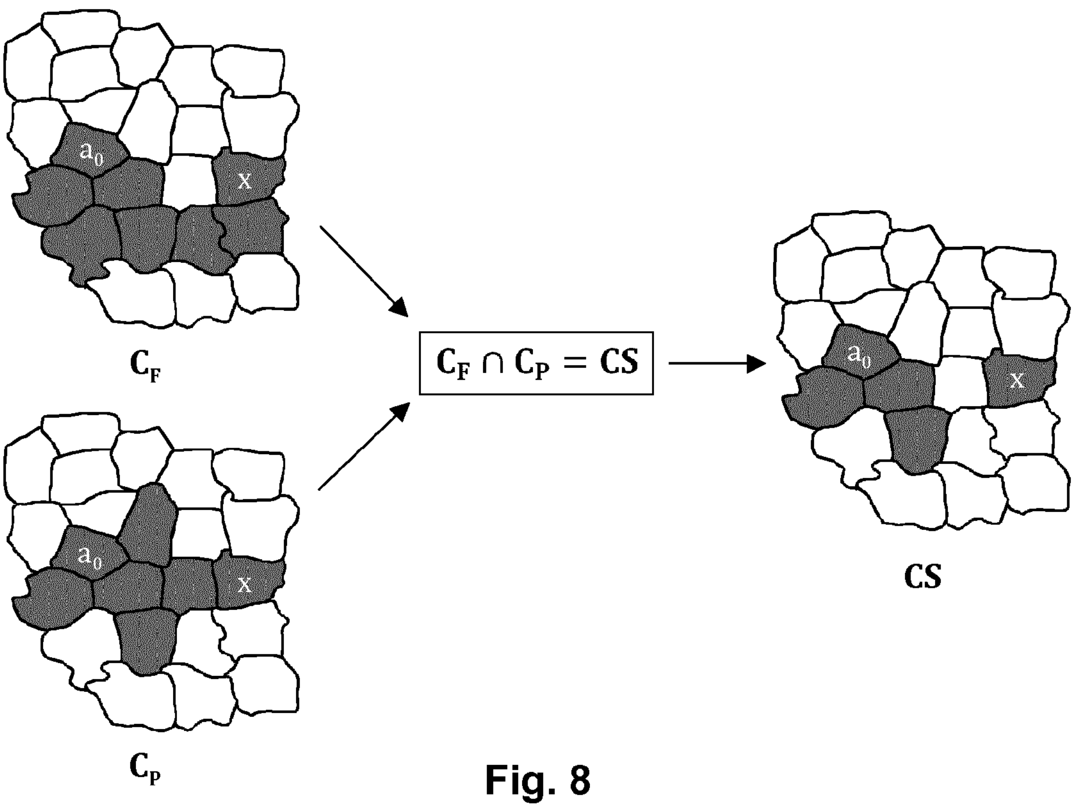
a0
x
CF
a0
x
CP
CF ∩ CP = CS
a0
x
CS

Fig. 8

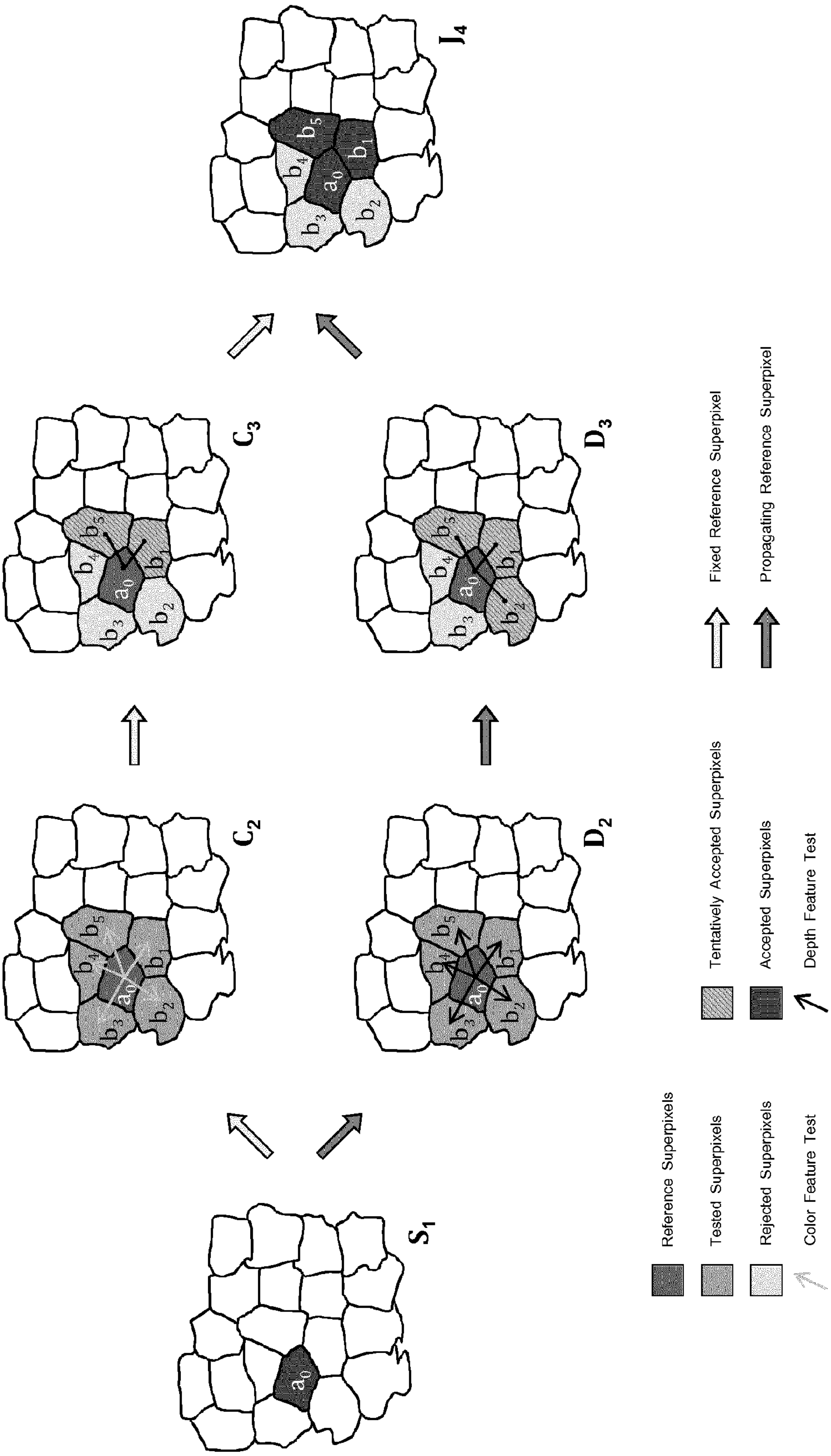

$S_1$
$C_2$
$D_2$
$C_3$
$D_3$
$J_4$
$a_0$
$b_1$
$b_2$
$b_3$
$b_4$
$b_5$
Reference Superpixels
Tested Superpixels
Rejected Superpixels
Color Feature Test
Tentatively Accepted Superpixels
Accepted Superpixels
Depth Feature Test
Fixed Reference Superpixel
Propagating Reference Superpixel


Fig. 9

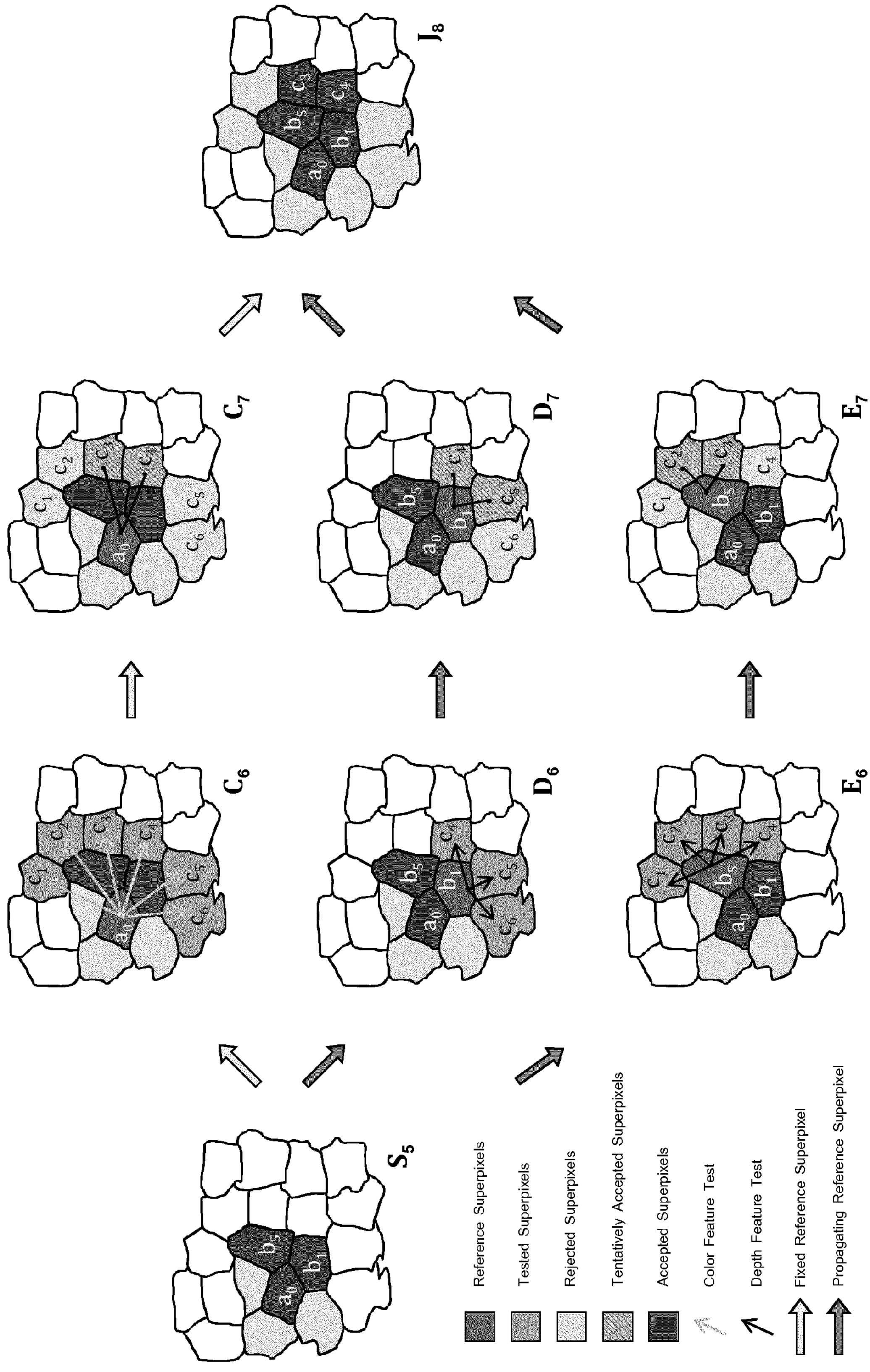
$S_5$
$C_6$
$D_6$
$E_6$
$C_7$
$D_7$
$E_7$
$J_8$
$a_0$ $b_1$ $b_5$
$c_1$ $c_2$ $c_3$ $c_4$ $c_5$ $c_6$
Reference Superpixels
Tested Superpixels
Rejected Superpixels
Tentatively Accepted Superpixels
Accepted Superpixels
Color Feature Test
Depth Feature Test
Fixed Reference Superpixel
Propagating Reference Superpixel

Fig. 10

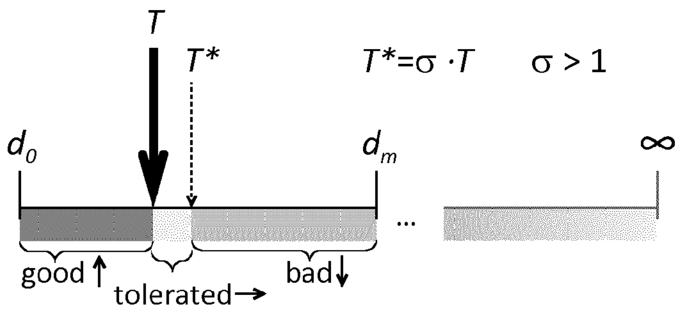
T
T*
T*=σ ·T
σ > 1
d0
dm
∞
...
good↑
tolerated→
bad↓

Fig. 11

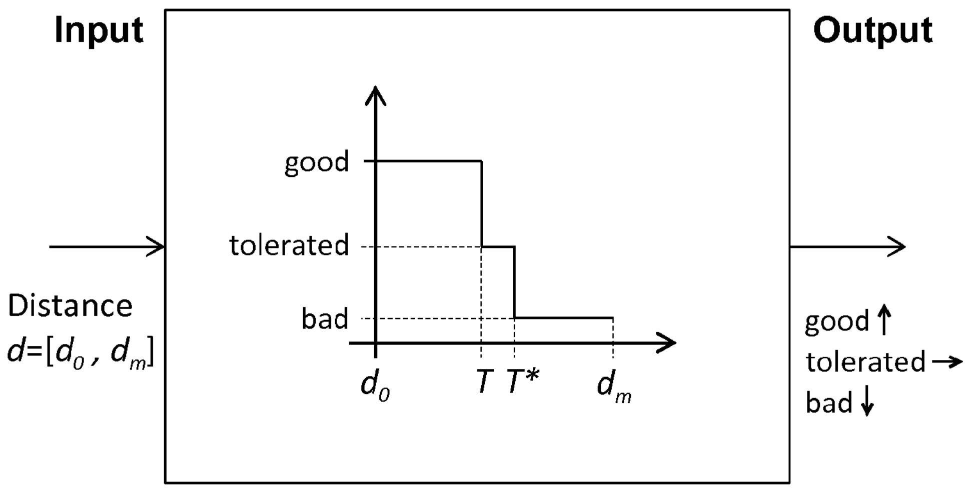
Input
Output
good
tolerated
bad
Distance
d=[d0 , dm]
d0
T T*
dm
good↑
tolerated→
bad↓

Fig. 12

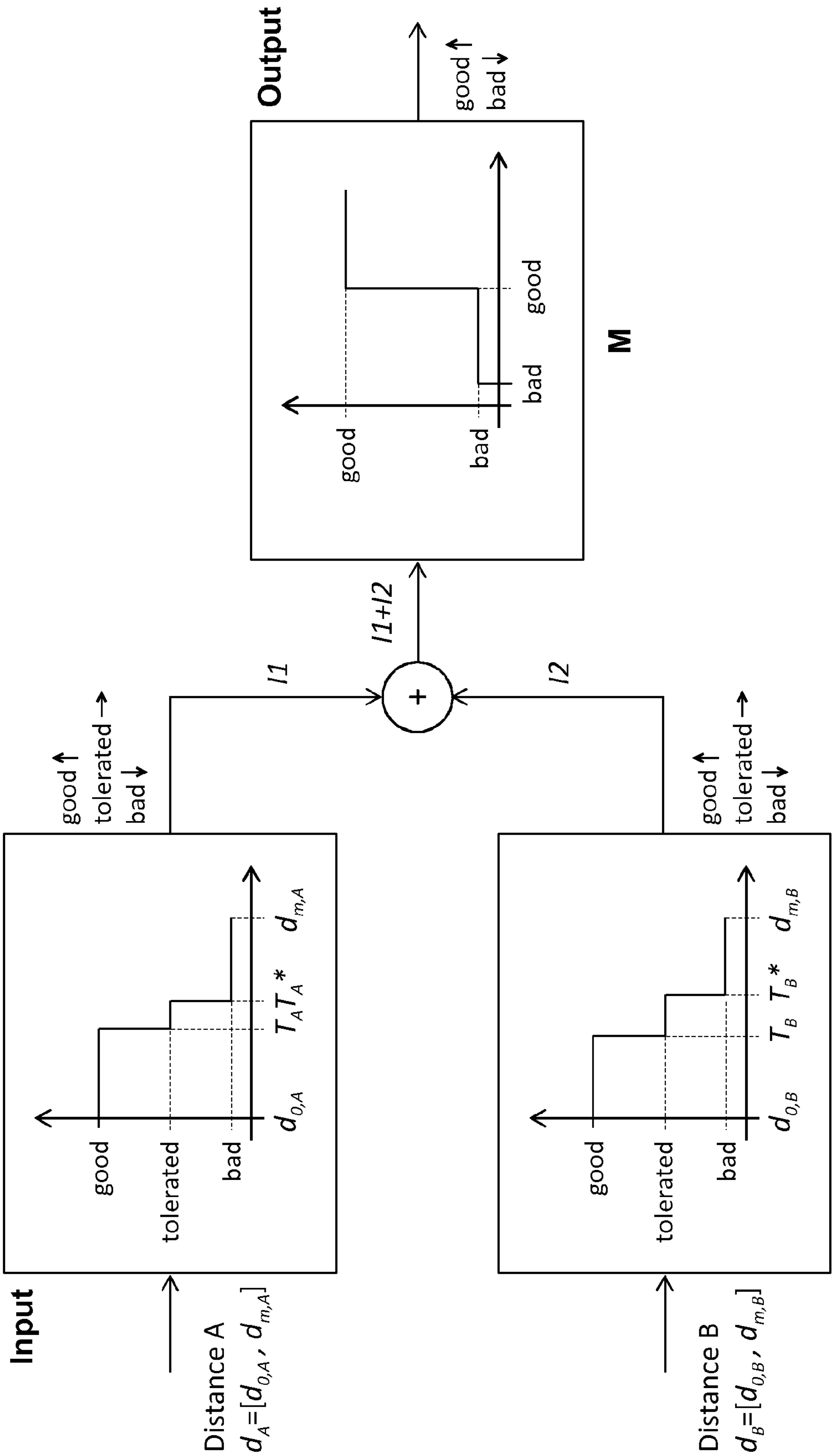
Input
Distance A
$d_A=[d_{0,A}, d_{m,A}]$
Distance B
$d_B=[d_{0,B}, d_{m,B}]$
good
tolerated
bad
$d_{0,A}$
$T_A$ $T_A{}^*$
$d_{m,A}$
$d_{0,B}$
$T_B$ $T_B{}^*$
$d_{m,B}$
good ↑
tolerated →
bad ↓
I1
I2
+
I1+I2
M
good
bad
Output
good ↑
bad ↓

Fig. 13

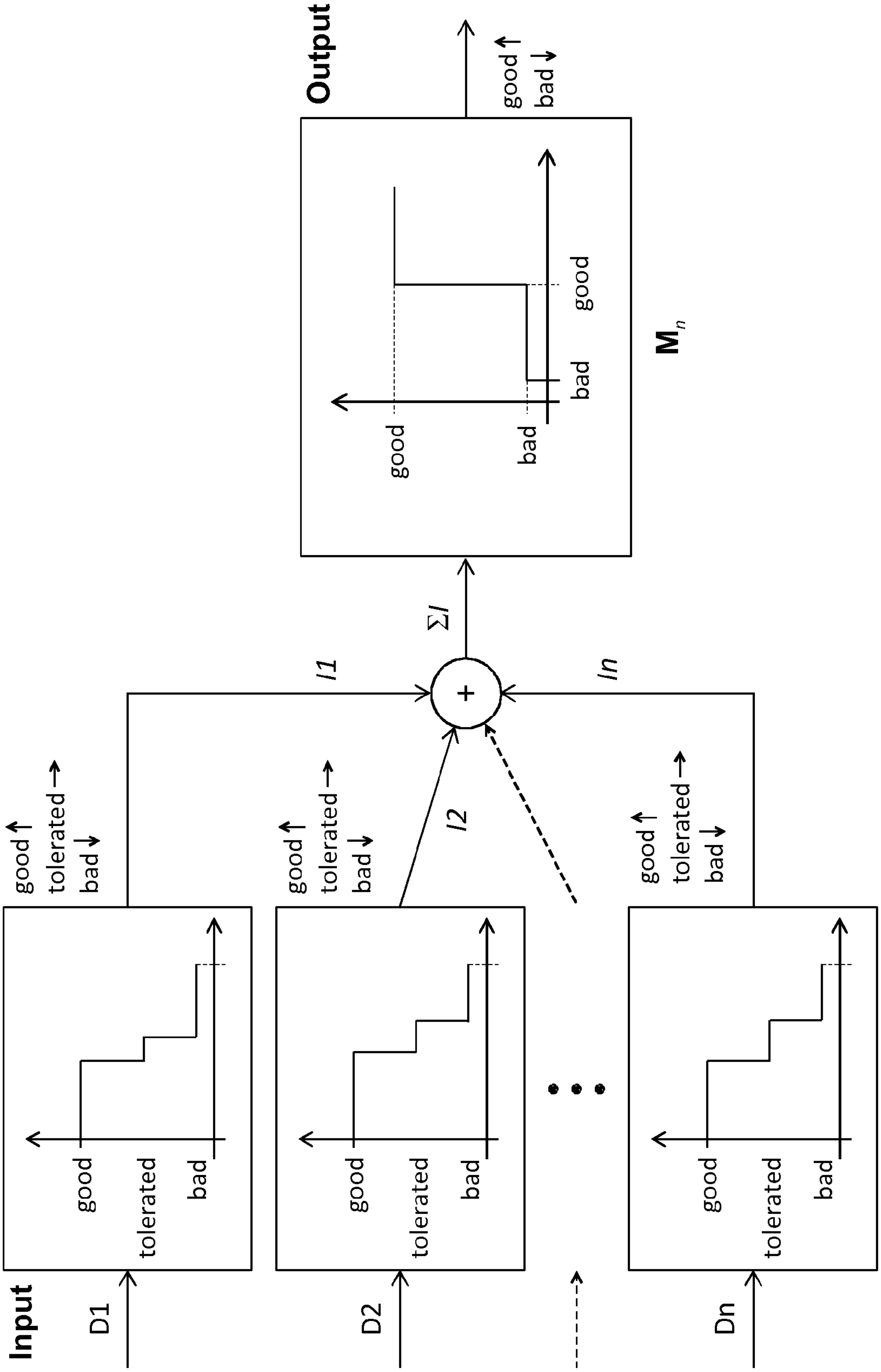
Input
D1
D2
Dn
good
tolerated
bad
good
tolerated
bad
I1
I2
In
+
ΣI
good
bad
good
bad
Mn
Output
good
bad

Fig. 14

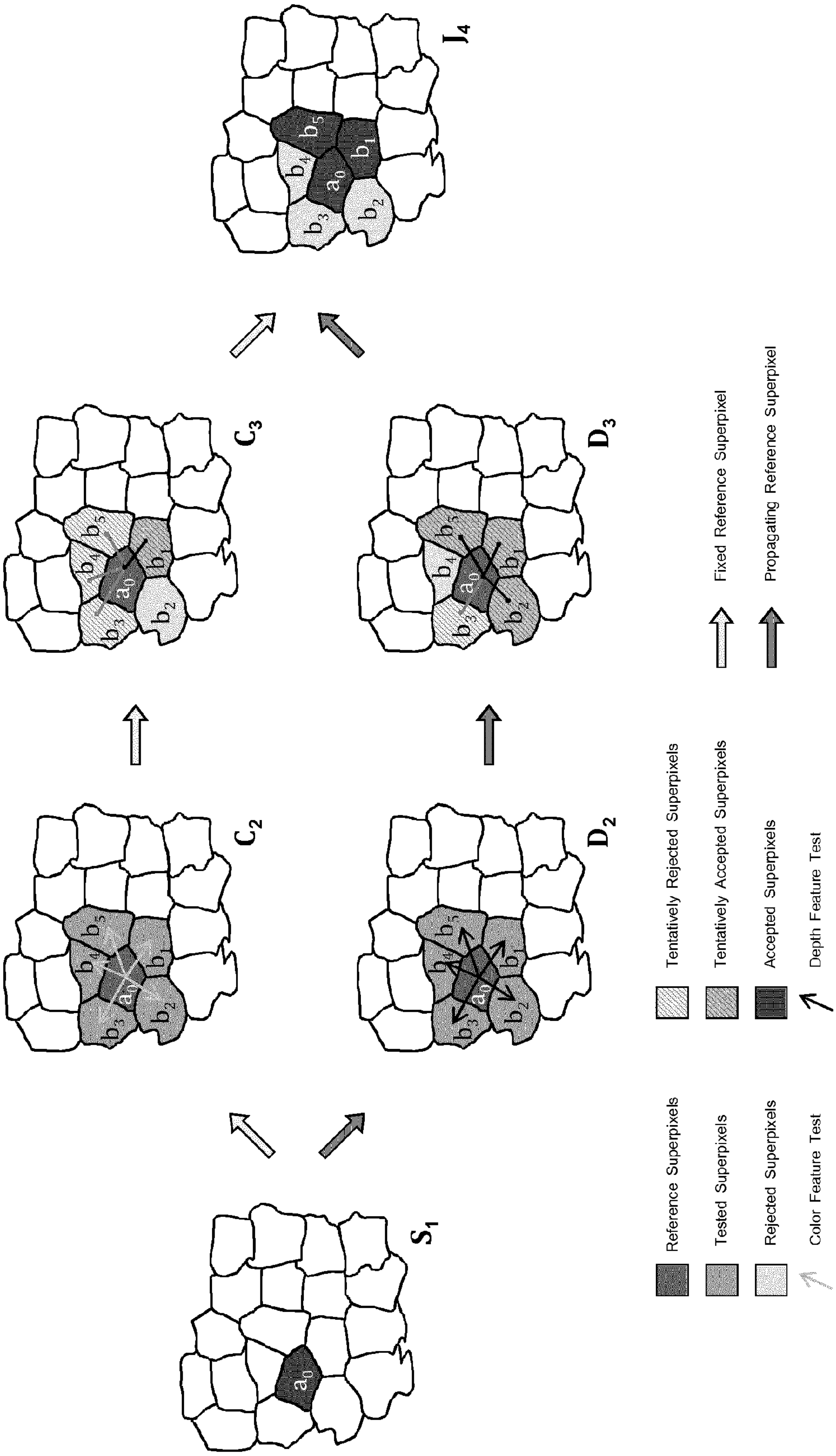
S1
C2
D2
C3
D3
J4
a0
b1
b2
b3
b4
b5
Reference Superpixels
Tested Superpixels
Rejected Superpixels
Color Feature Test
Tentatively Rejected Superpixels
Tentatively Accepted Superpixels
Accepted Superpixels
Depth Feature Test
Fixed Reference Superpixel
Propagating Reference Superpixel

Fig. 15

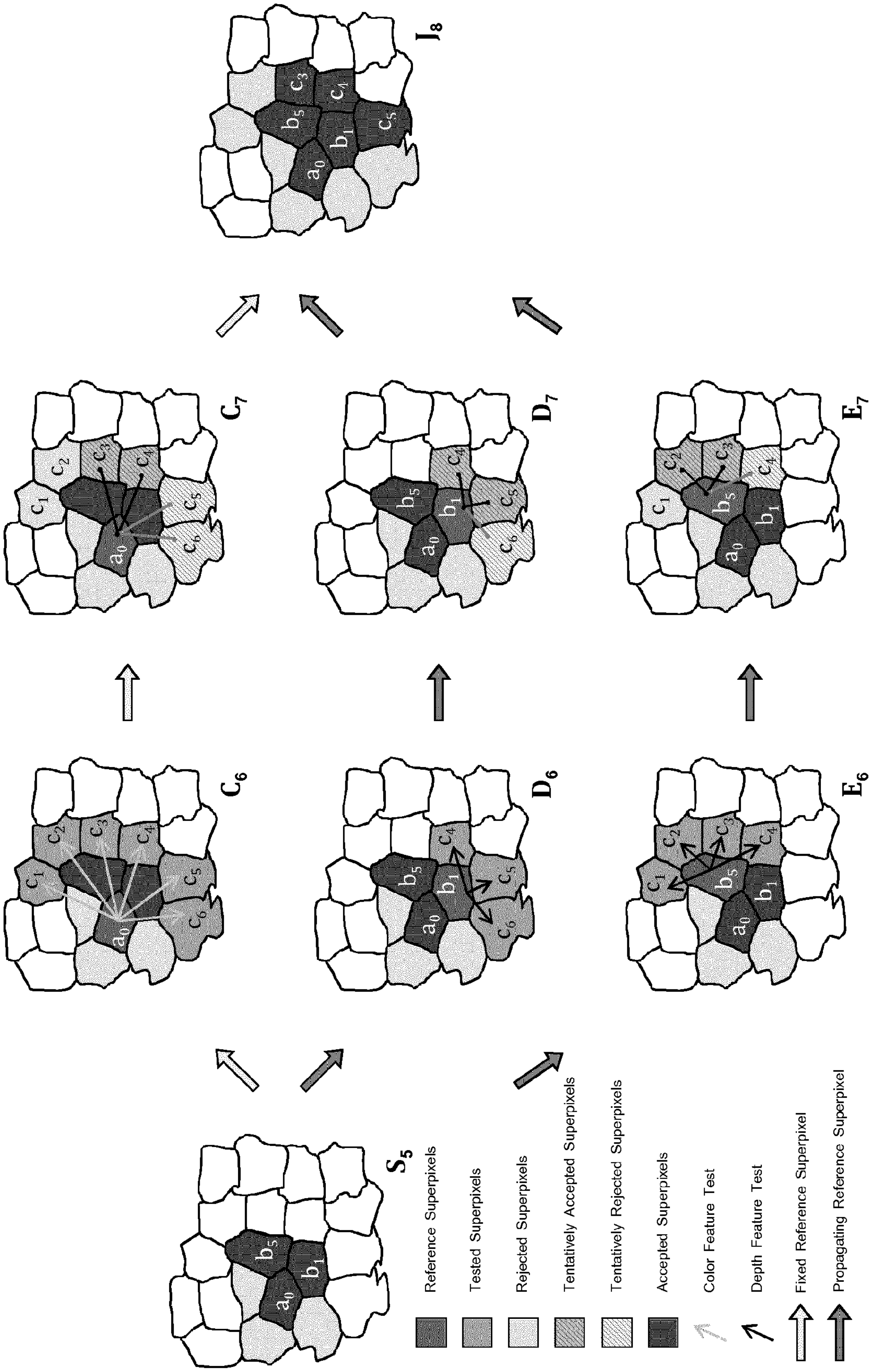
S5
C6
D6
E6
C7
D7
E7
J8
Reference Superpixels
Tested Superpixels
Rejected Superpixels
Tentatively Accepted Superpixels
Tentatively Rejected Superpixels
Accepted Superpixels
Color Feature Test
Depth Feature Test
Fixed Reference Superpixel
Propagating Reference Superpixel

Fig. 16

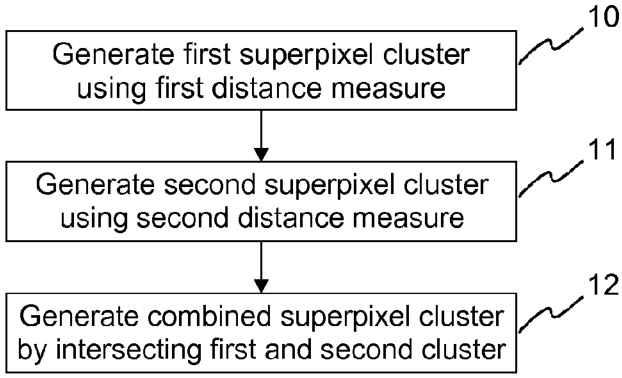


Fig. 17

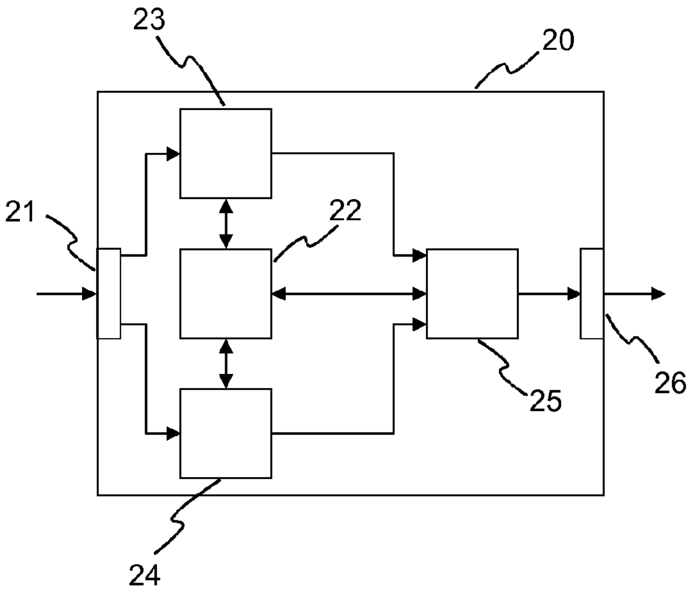


Fig. 18

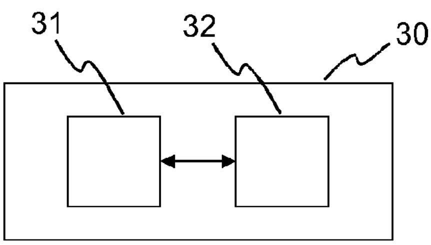


Fig. 19

Europäisches Patentamt
European Patent Office
Office européen des brevets

# EUROPEAN SEARCH REPORT

Application Number
EP 15 30 5370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Johannes Furch ET AL: "D4.3.2 Hybrid Scene Analysis Algorithms", , 30 October 2013 (2013-10-30), pages 1-60, XP055176149, Retrieved from the Internet: URL:http://3d-scene.eu/outcomes.htm [retrieved on 2015-03-12] * section "Cluster Forming" * * page 31, last paragraph - page 32, paragraph 1 * * figures 12-14, 17, 18 * ----- | 1-10 | INV. G06T7/00 |
| X | MAKROGIANNIS S ET AL: "Segmentation of color images using a hierarchical fuzzy region merging technique", 2000 10TH EUROPEAN SIGNAL PROCESSING CONFERENCE, IEEE, 4 September 2000 (2000-09-04), pages 1-4, XP032756067, ISBN: 978-952-15-0443-3 [retrieved on 2015-03-31] | 1,8-10 | |
| Y | * sections 1, 2 * ----- | 1-10 | TECHNICAL FIELDS SEARCHED (IPC) G06T |
| X | KARATZAS D ET AL: "Two approaches for text segmentation in web images", DOCUMENT ANALYSIS AND RECOGNITION, 2003. PROCEEDINGS. SEVENTH INTERNAT IONAL CONFERENCE ON AUG. 3-6, 2003, PISCATAWAY, NJ, USA,IEEE, 3 August 2003 (2003-08-03), pages 131-137, XP010656596, DOI: 10.1109/ICDAR.2003.1227646 ISBN: 978-0-7695-1960-9 | 1,8-10 | |
| Y | * section 2.2 * * figure 2 * ----- | 1-10 | |

The present search report has been drawn up for all claims

1

| Place of search | Date of completion of the search | Examiner |
|---|---|---|
| Munich | 17 September 2015 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 14306577 A


### Non-patent literature cited in the description


- **ACHANTA et al.** SLIC Superpixels Compared to State-of-the-Art Superpixel Methods. *IEEE Transactions on Pattern Analysis and Machine Intelligence,* 2012, vol. 43, 2274-2282